Europäisches Patentamt

European Patent Office

Office européen des brevets

(19)

(11) Veröffentlichungsnummer: **0 010 814**
**B1**

(12) **EUROPÄISCHE PATENTSCHRIFT**

(45) Veröffentlichungstag der Patentschrift:
15.06.83

(51) Int. Cl.³: **C 08 F 210/16, C 08 F 4/68**

(21) Anmeldenummer: 79200632.2

(22) Anmeldetag: 30.10.79

(54) Verfahren zur Herstellung von pulverförmigen, thermoplastischen Copolymeren aus Äthylen und Buten-(1).

(30) Priorität: 04.11.78 DE 2847986

(43) Veröffentlichungstag der Anmeldung:
14.05.80 Patentblatt 80/10

(45) Bekanntmachung des Hinweises auf die Patenterteilung:
15.06.83 Patentblatt 83/24

(84) Benannte Vertragsstaaten:
BE CH DE FR GB IT LU NL SE

(56) Entgegenhaltungen:
**BE-A-662 697**
**BE-A-862 697**
**DE-A-2 014 172**
**DE-A-2 206 429**
**GB-A-1 355 245**

**Die Akte enthält technische Angaben, die nach dem Eingang der Anmeldung eingereicht wurden und die nicht in dieser Patentschrift enthalten sind.**

(73) Patentinhaber: **CHEMISCHE WERKE HÜLS AG,**
**Postfach 1320, D-4370 Marl 1 (DE)**

(72) Erfinder: **Doerk, Klaus, Dr.,**
**Marcq-en-Baroeul-Strasse 120, D-4390 Gladbeck (DE)**
Erfinder: **Koch, Klaus, Dr., Matthias-Claudius-Strasse 4, D-4272 Kirchhellen (DE)**
Erfinder: **Banke, Horst, Dr., In der Miere 22, D-4270 Dorsten (DE)**
Erfinder: **Toben, Bernhard, Wiesengrund 17, D 4235 Schermbeck (DE)**

(74) Vertreter: **Steil, Hanna, Dipl.-Chem. et al, RSP PATENTE - PB 15 Postfach 1320, D-4370 Marl 1 (DE)**

Verfahren zur Herstellung von pulverförmigen, thermoplastischen Copolymeren
aus Äthylen und Buten-(1)

Beschreibung und Beispiele

Die Erfindung betrifft ein Verfahren zur Herstellung von thermoplastischen Copolymeren des Äthylens niedriger Dichte als verarbeitbare Pulver relativ hoher Schüttdichten durch Copolymerisation von Äthylen und Buten-(1) mit Hilfe von Vanadin enthaltenden Ziegler-Katalysatoren.

Die Herstellung von Äthylenpolymerisaten niedriger Dichte wird üblicherweise durch Polymerisation von Äthylen mit radikalischer Initiierung unter hohen Drücken von 1000 bar bis 3000 bar hergestellt. Diese Verfahren sind einmal mit dem Nachteil verbunden, daß die Erzeugung hoher Drücke technisch aufwendig und kostspielig ist. Ein anderer Nachteil dieser Verfahren besteht darin, daß sich nach ihnen keine Polymerisate mit so hohen Molgewichten erzeugen lassen, daß sie befriedigende Eigenschaften aufweisen wie beispielsweise gute Spannungsrißbeständigkeit gegenüber oberflächenaktiven Medien oder hohe Bruchfestigkeit bei Wechselbiegebeanspruchung und andere mehr. Die nach den Hochdruckverfahren hergestellten Äthylenpolymerisate sind also wegen ihrer relativ niedrigen Molgewichte nicht für alle Einsatzgebiete verwendbar.

Weiterhin ist ein Verfahren bekannt geworden zur Herstellung von niedrigdichtem Polyäthylen mit Dichten von 0,915 g/cm$^3$ bis 0,930 g/cm$^3$ durch Copolymerisation von Äthylen mit (1)-Olefinen in Hexan bei Temperaturen $> 130°$C. Bei diesem Verfahren ist es von Nachteil, daß das Polymerisat in Hexan gelöst anfällt und aus dem Lösungsmittel abgetrennt werden muß.

In letzter Zeit ist durch das belgische Patent 862 697 ein Verfahren bekannt geworden, bei dem aus Äthylen und gegebenenfalls (1)-Olefinen als Comonomere durch Polymerisation mit Vanadin enthaltenden Katalysatoren in inerten flüssigen Kohlenwasserstoffen bei Temperaturen von 50°C bis etwa 95°C und Drücken von 10 bar bis 100 bar pulverförmige Polymerisate mit hervorragenden Eigenschaften für die Weiterverarbeitung zu Fertigteilen hergestellt werden können. Als Verdünnungsmittel bei der Polymerisation wurden flüssige inerte Kohlenwasserstoffe, vorzugsweise ein Hexanschnitt mit dem Siedebereich von 63°C bis 80°C, genannt. Unter Verwendung derartiger Verdünnungsmittel lassen sich jedoch keine pulverförmigen Polymerisate aus Äthylen und Buten-(1) mit Dichten von etwa 0,900 g/cm$^3$ bis etwa 0,930 g/cm$^3$ herstellen. Die Polymerisate fallen vielmehr als Brocken und Klumpen an und lassen sich in einer technischen Apparatur nicht hantieren.

Demgegenüber wurde nunmehr gefunden, daß man Copolymer niedriger Dichten aus Äthylen und Buten-(1) auch als rieselfähige Pulver mit relativ hohen Schüttdichten herstellen kann, wenn man als inertes Verdünnungsmittel flüssiges Buten-(1) verwendet, das gegebenenfalls auch andere inerte gesättigte und/oder ungesättigte C$_4$-Kohlenwasserstoffe enthalten kann.

Gegenstand der Erfindung ist daher ein Verfahren zur Herstellung von pulverförmigem thermoplastischen Copolymeren aus Äthylen und Buten-(1) mit Dichten von etwa 0,900 g/cm$^3$ bis etwa 0,930 g/cm$^3$, guter Rieselfähigkeit des Pulvers, mittleren Korndurchmessers bis zu 1000 μm und praktisch ohne Feinstkornanteil durch Polymerisation von Äthylen und Buten-(1), gegebenenfalls in Gegenwart von Wasserstoff, in inerten flüssigen Kohlenwasserstoffen bei Temperaturen zwischen 50°C und etwa 95°C und Drücken von 10 bar bis 100 bar, vorzugsweise 20 bar bis 60 bar, nach diskontinuierlichem oder kontinuierlichem Verfahren mittels Ziegler-Katalysatoren, hergestellt in inerten flüssigen Kohlenwasserstoffen durch Umsetzung chlor- und alkoxyhaltiger Vanadyl(V)-verbindungen mit aluminiumorganischen Verbindungen, Abtrennung des unlöslichen Reaktionsproduktes und Aktivierung mit aluminiumorganischen Verbindungen, wobei als Vanadyl(V)-verbindung ein Umsetzungsprodukt von Vanadyl(V)-chlorid und einem Vanadyl(V)-alkoholat in Molverhältnissen von 1 zu 2 bis 2 zu 1 oder direkt das Umsetzungsprodukt von Vanadyl(V)-chlorid mit einem Alkohol, vorzugsweise Äthanol, Propanol-(1), Butanol-(1) in Molverhältnissen von 1 zu 2 bis 1 zu 1 und als aluminiumorganische Verbindung zur Reduktion Äthylaluminiumdichlorid und/oder Diäthylaluminiumchlorid, Isobutylaluminiumdichlorid und/oder Diisobutylaluminiumchlorid in Molverhältnissen von Aluminium- zu Vanadinverbindungen von 1 zu 1 bis 3 zu 1 verwendet und die Umsetzung der Vanadin-Verbindungen mit den aluminiumorganischen Verbindungen unter Rühren mit spezifischen Rührleistungen von 0,1 bis 20 000 Watt/m$^3$, vorzugsweise 1 bis 5000 Watt/m$^3$, vorgenommen wird und die Aktivierung mit Aluminiumalkylverbindungen der Formel AlR$_3$, worin R Kohlenwasserstoffreste mit 2 bis 8 C-Atomen bedeuten, oder mit Alkylaluminiumsesquichlorid und/oder Alkylaluminiumdichlorid, insbesondere Äthylaluminiumsesquichlorid und/oder Äthylaluminiumdichlorid erfolgt, dadurch gekennzeichnet, daß man in flüssigem Buten-(1), gegebenenfalls in Gegenwart weiterer inerter, gesättigter und/oder ungesättigter C$_4$-Kohlenwasserstoffe, polymerisiert.

Vorzugsweise wird erfindungsgemäß unter Verwendung von reinem Buten-(1) polymerisiert. Die handelsübliche Reinheit beträgt 99 Prozent. Erfindungsgemäß verwendbar ist aber auch ein C$_4$-Schnitt, der beispielsweise außer Buten-(1), trans- und cis-Buten-(2), Isobuten, n-Butan und Isobutan enthalten kann. Wichtig ist es, daß die Beimengungen sich gegenüber dem Polymerisationskatalysator indifferent verhalten. So sollte das Gemisch beipsielsweise möglichst kein Butadien-(1,3) enthalten, welches sich als Katalysatorgift erwiesen hat. Selbstverständlich ist darauf zu achten, daß das bei der Polymerisation für die gewünschte Dichte des Copolymerisates jeweils erforderliche Molverhältnis von Buten-(1) zu Äthylen eingehalten wird.

Das Verfahren gemäß der vorliegenden Erfindung bietet überraschenderweise die Möglichkeit, mit dem aus der belgischen Patentschrift 862 697 bekannten Katalysatorsystem auch Copolymere aus Äthylen und Buten-(1) mit wesentlich niedrigeren Dichten herzustellen als sie in der belgischen Patentschrift beschrieben sind, wobei die Polymerisate als Pulver im Verdünnungsmittel suspendiert anfallen und nach ihrer Abtrennung aus der Suspension für die Weiterverarbeitung zu Kunststofffertigteilen nach Zusatz der üblichen Konfektionierungshilfsmittel geeignet sind, so daß die sonst notwendige Aufbereitung der Polymerisate zu Granulaten unterbleiben kann. Da sich mit den erfindungsgemäß angewendeten Katalysatoren sehr hohe Umsätze erzielen lassen, kann auf Maßnahmen zur Entfernung des Katalysators aus dem Polymerisat verzichtet werden. Infolge ihrer hohen Molgewichte besitzen die erfindungsgemäß hergestellten Copolymeren niedriger Dichte hervorragende anwendungstechnische Eigenschaften. So weisen aus den erfindungsgemäß hergestellten Copolymeren hergestellte Rohre außer ihrer für manche Anwendungszwecke erforderlichen hohen Flexibilität hohe Berstdrücke und ausgezeichnete Wechselbiegefestigkeiten auf. Spritzgußteile zeigen einen hervorragenden Oberflächenglanz und besitzen keine Neigung zu Schrumpf und Verzug. Aus den erfindungsgemäß hergestellten Copolymeren gefertigte Folien zeichnen sich durch besondere Stoßfestigkeit und Streckdehnung aus.

Das Verfahren gemäß der vorliegenden Erfindung wird durch die nachstehenden Beispiele illustriert:

### Beispiele 1 — 10

a) Katalysatorherstellung

122,3 g (705,7 mMol) Vanadyl(V)-chlorid und 172,3 g (705,7 mMol) Vanadyl(V)-n-propylat wurden zusammen in 1,7 l eines Hexanschnittes 63/80° C unter Stickstoff 2 Stunden lang auf 55° C erhitzt. Nach Abkühlen der Mischung wurde bei 20° C bis 25° C eine Lösung von 358,2 g (2822,8 mMol) Äthylaluminiumdichlorid in 1,43 l des Hexanschnittes 63/80° C im Laufe von 2 Stunden unter Rühren mit einem Blattrührer und einer spezifischen Rührleistung von 126 Watt/m³ zugegeben. Die erhaltene Suspension wurde danach noch 2 Stunden bei 55° C mit gleicher spezifischer Rührleistung gerührt. Nach dem Abkühlen wurde der Feststoff abgetrennt und fünfmal mit je 5 l des Hexanschnittes gewaschen.

b) Copolymerisation von Äthylen und Buten-(1)

In einen 2-l-Stahlautoklaven wurden unter Stickstoff 4 ml einer Lösung von Triisobutylaluminium in Hexan mit einer Konzentration von 100 g/l einpipettiert. Unter Wasserkühlung wurden 600 g Buten-(1) über eine mit Molekularsieb 3A (Hersteller: Union Carbide) gefüllte Patrone in den Autoklaven gedrückt. Darauf wurde auf die Polymerisationstemperatur aufgeheizt. Zur Entfernung des Stickstoffs wurden über eine Gasuhr 4 Liter Gas abgelassen. Dann wurde Wasserstoff aufgedrückt und danach unter Rühren (1000 upm) Äthylen. Über eine Schleuse wurde eine Suspension der unter a) beschriebenen Katalysatorkomponente mit einer Konzentration von 10 g Feststoff pro Liter Hexan in den Autoklaven abgelassen. Nach Ablauf der Polymerisationszeit, während der die Polymerisationstemperatur sowie durch Nachfahren von Äthylen der Druck konstant gehalten wurden, wurde auf Raumtemperatur abgekühlt und das überschüssige Buten entspannt. Nähere Angaben zu den einzelnen Beispielen sind den folgenden Tabellen 1 und 2 zu entnehmen.

Abbildung: Mikrofoto des in Beispiel (3) hergestellten pulverförmigen Polymerisates
Abbildungsmaßstab: 16 : 1

Tabelle 1

Copolymerisation von Äthylen und Buten-(1)

| Beispiel Nr. | Katalysator-komponente nach a) | $pH_2$ | $p_{gesamt}$ | T | t | Aus-beute | Katalysator-ausnutzung kg Polymerisat | $J^1)$ | Dichte[2]) bei 23°C | Schütt-dichte[3]) |
|---|---|---|---|---|---|---|---|---|---|---|
| | mg | bar | bar | °C | h | g | g Katalysator-feststoff | $cm^3/g$ | $g/cm^3$ | $g/cm^3$ |
| 1 | 10 | 1,5 | 33 | 75 | 1 | 104 | 10,4 | 180 | 0,925 | 0,264 |
| 2 | 15 | 1,5 | 33 | 75 | 2 | 151 | 10,1 | 230 | 0,915 | 0,306 |
| 3 | 10 | 1,5 | 33 | 75 | 4 | 160 | 16,0 | 190 | 0,917 | 0,301 |
| 4 | 10 | 0,5 | 33 | 75 | 4 | 219 | 21,9 | 500 | 0,909 | 0,265 |
| 5 | 10 | 0,5 | 28 | 75 | 4 | 131 | 13,1 | 330 | 0,904 | 0,355 |
| 6[4]) | 15 | 0,5 | 14 | 75 | 20 | 120 | 8,0 | 250 | 0,916 | 0,365 |
| 7 | 10 | 1,5 | 36 | 60 | 4 | 217 | 21,7 | 220 | 0,920 | 0,320 |
| 8 | 10 | 1,5 | 36 | 55 | 1 | 184 | 18,4 | 250 | 0,924 | 0,300 |
| 9 | 10 | 1,5 | 36 | 55 | 4 | 336 | 33,6 | 280 | 0,926 | 0,315 |
| 10 | 10 | 1,5 | 36 | 50 | 4 | 312 | 31,2 | 360 | 0,930 | 0,315 |

[1]) Viskositätszahl nach DIN 53 728.
[2]) DIN 53 479.
[3]) DIN 53 468.
[4]) Anstelle von 660 g Buten-(1) ist eine Mischung von 103 g Buten-(1), 148 g Buten-(2), 210 g trans-Buten-(2) und 234 g n-Butan verwendet worden.

Tabelle 2

Eigenschaften des Copolymerisates von Beispiel 2

| Eigenschaft | Meßmethode | | Einheit | Wert |
|---|---|---|---|---|
| Viskositätszahl J | ISO/R 1191-70 | DIN 53728 Blatt 4 | cm³/g | 230 |
| Molekulare Daten | | | | |
| Mittleres Molekulargewicht $\overline{M}_v$ | Lösungviskosität c = 0,001 g/cm³ | | | 90 000 |
| Mittleres Molekulargewicht $\overline{M}_w$ | | | | 130 000 |
| $U = \dfrac{\overline{M}_w}{\overline{M}_n} - 1$ (GPC*) | | | | 20 |
| IR-Analyse | | | | |
| C = C/1000 C | | | | |
| Vinyl | | | | 0,12 |
| trans | | | | 0,07 |
| Vinyliden | | | | 0,06 |
| CH₃/1000 C | | | | 46,1 |
| Schmelzindex MFI 190/5 | ISO 1133 Prozedur 5 | DIN 53735 | g/10 min | 3,1 |
| Vicat-Erweichungstemperatur | ISO 306-1974 | DIN 53460 Prüfverfahren A/50 | °C | 85 |
| Schmelzbereich | Differential-Scanning Calorimeter | | Anf. °C | 75 |
| | | | Max. °C | 125 |
| | | | Ende °C | 135 |
| Schmelzwärme | dito | | J/g | 60 |
| Dichte bei 23°C | ISO/R 1183 | DIN 53479 | g/cm³ | 0,915 |
| Streckspannung | ISO/R 527, Vorschub- geschwin- digkeit C | DIN 53455 Vorschub- geschwin- digkeit V | N/mm² | 7 |
| Reißfestigkeit | | | N/mm² | 16 |
| Reißdehnung | Prüfstab nach Abb. 2 | Prüfstab 4 | % | 850 |
| Kugeldruckhärte | ISO 2039 (H 358/30) | DIN 53456 (H 358/30) | N/mm² | 12 |
| Shore-A-Härte | | DIN 53505 | Shore-A- Härte- Einheiten | 95 |
| Schubmodul bei 23°C | ISO/R 537 Methode A | DIN 53445 | N/mm² | 140 |

* Gelpermeationschromatographische Analyse.

## Beispiel 11

a) Erfindungsgemäße Copolymerisation von Äthylen und Buten-(1)

Es wurde analog Beispiel 10 verfahren. Davon abweichend wurde als Verdünnungsmittel ein Gemisch aus 79 g Buten-(1), 228 g n-Butan, 214 g trans-Buten-(2), 148 g cis-Buten-(2) verwendet. Die Menge der festen Katalysatorkomponente betrug 44 mg. Die Polymerisation wurde bereits nach einer Stunde abgebrochen. Es wurden 55 g eines gut rieselfähigen pulverförmigen Polymerisates erhalten. Die Eigenschaften sind in der Tabelle 3 aufgeführt.

b) Vergleichsversuch

Es wurde wie unter 11a) verfahren, jedoch mit dem Unterschied, daß als Verdünnungsmittel Hexan 63/80°C eingesetzt wurde. Die eingesetzte Menge an Buten-(1) betrug 72 g, der Äthylenpartialdruck wie in Beispiel 11a) 4,5 bar. Die Ausbeute an Polymerisat betrug 79 g und bestand aus groben Brocken bzw. Klumpen.

Tabelle 3

| Beispiel | Viskositätszahl J | Dichte | Schüttdichte | Rieselgeschwindigkeit |
|---|---|---|---|---|
| | DIN 53 728 | DIN 53479 | DIN 53 468 | DIN 53 492 |
| | $cm^3/g$ | $g/cm^3$ | $g/cm^3$ | $cm^3/s$ |
| 11a | 130 | 0,920 | 0,335 | 4,7* |
| 11b Vergleichsversuch | 230 | 0,922 | nicht bestimmbar | nicht bestimmbar |

* Durchmesser d der Auslauföffnung des Rieseltrichters: 10 mm.

## Beispiel 12

Es wurde analog Beispiel 1 verfahren. Anstelle von Triisobutylaluminium wurde jedoch Tri-n-octylaluminium als Cokatalysator angewendet. Eingesetzt wurden 2,2 ml einer Lösung in Hexan mit einer Konzentration von 167 g Tri-n-octylaluminium pro Liter. Die Menge der festen Katalysatorkomponente betrug 20 mg, der Wasserstoffpartialdruck 1,0 bar, der Gesamtdruck 33 bar. Polymerisiert wurde 4 Stunden lang bei 60°C. Das Polymerisat bestand aus einem rieselfähigen Pulver. Weitere Angaben sind der Tabelle 4 zu entnehmen.

## Beispiel 13

Es wurde wie bei Beispiel 12 verfahren. Anstelle von Tri-n-octylaluminium wurde aber Diäthylaluminiumchlorid eingesetzt, und zwar 2,2 ml einer Lösung in Hexan mit einer Konzentration von 112 g Diäthylaluminiumchlorid pro Liter. Das Polymerisat bestand aus einem rieselfähigen Pulver. Weitere Angaben sind der Tabelle 4 zu entnehmen.

Tabelle 4

Copolymerisation von Äthylen und Buten-(1)

| Beispiel Nr. | Cokatalysator | Ausbeute | Katalysator-ausnutzung | $J^1)$ | Dichte$^2)$ bei 23°C | Schütt-dichte$^3)$ |
|---|---|---|---|---|---|---|
| | | | kg Polymerisat | | | |
| | | g | g Katalysator-feststoff | $cm^3/g$ | $g/cm^3$ | $g/cm^3$ |
| 12 | Tri-n-octylaluminium | 180 | 8,5 | 390 | 0,900 | 0,325 |
| 13 | Diäthylaluminiumchlorid | 194 | 8,7 | 340 | 0,915 | 0,265 |

$^1)$ Viskositätszahl nach DIN 53 728.
$^2)$ DIN 53 479.
$^3)$ DIN 53 468.

## Patentanspruch

Verfahren zur Herstellung von pulverförmigen thermoplastischen Copolymeren aus Äthylen und Buten-(1) mit Dichten von etwa 0,900 g/cm³ bis etwa 0,930 g/cm³, guter Rieselfähigkeit des Pulvers, mittleren Korndurchmessern bis zu 1000 µm und praktisch ohne Feinstkornanteil durch Polymerisation von Äthylen und Buten-(1), gegebenenfalls in Gegenwart von Wasserstoff, in inerten flüssigen Kohlenwasserstoffen bei Temperaturen zwischen 50°C und etwa 95°C und Drücken von 10 bar bis 100 bar, vorzugsweise 20 bar bis 60 bar, nach diskontinuierlichem oder kontinuierlichem Verfahren mittels Ziegler-Katalysatoren, hergestellt in inerten flüssigen Kohlenwasserstoffen durch Umsetzung chlor- und alkoxyhaltiger Vanadyl(V)-verbindungen mit aluminiumorganischen Verbindungen, Abtrennung des unlöslichen Reaktionsproduktes und Aktivierung mit aluminiumorganischen Verbindungen, wobei als Vanadyl(V)-verbindung ein Umsetzungsprodukt von Vanadyl(V)-chlorid und einem Vanadyl(V)-alkoholat in Molverhältnissen von 1 zu 2 bis 2 zu 1 oder direkt das Umsetzungsprodukt von Vanadyl(V)-chlorid mit einem Alkohol, vorzugsweise Äthanol, Propanol-(1), Butanol-(1) in Molverhältnissen von 1 zu 2 bis 1 zu 1 und als aluminiumorganische Verbindung zur Reduktion Äthylaluminiumdichlorid und/oder Diäthylaluminiumchlorid, Isobutylaluminiumdichlorid und/oder Diisobutylaluminiumchlorid in Molverhältnissen von Aluminium- zu Vanadinverbindungen von 1 zu 1 bis 3 zu 1 verwendet und die Umsetzung der Vanadin-Verbindungen mit den aluminiumorganischen Verbindungen unter Rühren mit spezifischen Rührleistungen von 0,1 bis 20 000 Watt/m³, vorzugsweise 1 bis 5000 Watt/m³, vorgenommen wird und die Aktivierung mit Aluminiumalkylverbindungen der Formel AlR₃, worin R Kohlenwasserstoffreste mit 2 bis 8 C-Atomen bedeuten, oder mit Alkylaluminiumsesquichlorid und/oder Alkylaluminiumdichlorid, insbesondere Äthylaluminiumsesquichlorid und/oder Äthylaluminiumdichlorid erfolgt, dadurch gekennzeichnet, daß man in flüssigem Buten-(1), gegebenenfalls in Gegenwart weiterer inerter, gesättigter und/oder ungesättigter C₄-Kohlenwasserstoffe, polymerisiert.

## Claim

Process for the preparation of pulverulent thermoplastic copolymers of ethylene and but-1-ene, having densities of about 0,900 g/cm³ to about 0,930 g/cm³, good free-flowing characteristics of the powder, average particle diameters of up to 1000 µm, and virtually zero proportion of extremely fine particles, by polymerisation of ethylene and but-1-ene, if appropriate in the presence of hydrogen, in inert liquid hydrocarbon at temperatures of between 50°C and about 95°C and pressures of 10 bar to 100 bar, preferably 20 bar to 60 bar, by a batchwise or continous process employing Ziegler catalysts which have been prepared in inert liquid hydrocarbons by reacting chlorine- and alkoxy-containing vanadyl(V) compounds with organo-aluminium compounds, separating off the insoluble reaction product and activating it with organo-aluminium compounds, the vanadyl(V) compound used being a reaction product of vanadyl(V) chloride and a vanadyl(V) alcoholate in molar ratios of from 1 : 2 to 2 : 1, or using directly, as the vanadyl(V) compound, the reaction product of vanadyl(V) chloride with an alcohol, preferably ethanol, propan-1-ol or butan-1-ol in a molar ratio of from 1 : 2 to 1 : 1, and using, as the organo-aluminium compound for the reduction, ethyl-aluminium dichloride and/or diethylaluminium chloride, isobutyl-aluminium dichloride and/or diisobutyl-aluminium chloride, in molar ratios of aluminium compounds to vanadium compounds of from 1 : 1 to 3 : 1, the reaction of the vanadium

7

compounds with the organo-aluminium compounds being carried out while stirring with specific stirring power of from 0,1 to 20 000 watt/m³, preferably 1 to 5000 watt/m³, and the activation being effected with aluminium-alkyl compounds of the formula AlR₃, wherein R denotes hydrocarbon radicals having 2 to 8 C atoms, or with alkyl-aluminium sesquichloride and/or alkyl-aluminium dichloride, especially ethyl-aluminium sesquichloride and/or ethyl-aluminium dichloride, characterized in that the polymerisation is carried out in liquid but-1-ene, if appropriate in the presence of additional inert saturated and/or unsaturated, C₄-hydrocarbons.

**Revendication**

Procédé de fabrication de copolymères thermoplastiques pulvérulents d'éthylène et de butène-1 ayant des densités d'environ 0,900 g/cm³ à environ 0,930 g/cm³, une bonne capacité de ruissellement de la poudre, des diamètres moyens de particule allant jusqu'à 1000 µm et pratiquement sans fraction granulée très fine, par polymérisation de l'éthylène et du butène-(1), éventuellement en présence d'hydrogène, dans des hydrocarbures liquides inertes à des températures entre 50°C et environ 95°C et sous des pressions de 10 bars à 100 bars, de préférence de 20 bars à 60 bars, par un procédé discontinu ou continu au moyen de catalyseurs Ziegler préparés dans des hydrocarbures liquides inertes par réaction de composés de vanadyle(V) contenant du chlore et des alcoxy avec des composés organiques d'aluminium, séparation du produit de réaction insoluble et activation avec des composés organiques d'aluminium, en utilisant comme composé de vanadyle(V) un produit de réaction de chlorure de vanadyle(V) et d'un alcoolate de vanadyle(V) dans des proportions molaires de 1 à 2 jusqu'à 2 à 1, ou directement le produit de réaction du chlorure de vanadyle(V) avec un alcool, de préférence de l'éthanol, du propanol-(1), du butanol-(1), dans les rapports molaires de 1 à 2 jusqu'à 2 à 1 et, en tant que composé organique d'aluminium pour la réduction, du dichlorure d'éthyl-aluminium et/ou du chlorure de diéthyl-aluminium, du dichlorure d'isobutyl-aluminium et/ou du chlorure de diisobutyl-aluminium dans les rapports molaires des composés d'aluminium à ceux de vanadium de 1 à 1 jusqu'à 3 à 1, et en entreprenant la réaction des composés de vanadium avec les composés organiques d'aluminium sous agitation avec des puissances spécifiques d'agitation de 0,1 à 20 000 watts/m³, de préférence de 1 à 5000 watts/m³, et l'activation se faisant avec les composés alcoylés d'aluminium de formule AlR₃ dans laquelle les R signifient des radicaux hydrocarbonés ayant 2 à 8 atomes de carbone, ou avec du sesquichlorure d'alcoyl-aluminium et/ou du dichlorure d'alcoyl-aluminium, en particulier du sesquichlorure d'éthyl-aluminium et/ou du dichlorure d'éthyl-aluminium, caractérisé en ce qu'on polymérise dans du butène-(1) liquide, éventuellement en présence d'autres hydrocarbures en C₄ inertes, saturés et/ou non saturés.